# EUROPÄISCHE PATENTSCHRIFT

(11) **EP 3 184 304 B1**
(45) Veröffentlichungstag und Bekanntmachung des Hinweises auf die Patenterteilung: **07.11.2018**
(21) Anmeldenummer: 16204116.4
(22) Anmeldetag: 14.12.2016
(51) Int. Cl.: B41F 35/00, B01D 61/00, C02F 1/44, C02F 1/66, C02F 1/52, C02F 1/56, C02F 101/30

(54) **WIEDERAUFBEREITUNGSVERFAHREN VON WASCHABFALL AUS DEM DRUCKPROZESS**
RECYCLING PROCESS OF WASHING WASTE FROM THE PRINTING PROCESS
MÉTHODE DE RETRAITEMENT DES DÉCHETS DE LAVAGE PROVENANT DU PROCESSUS D'IMPRESSION

(30) Priorität: 21.12.2015 DE 102015122337
(43) Veröffentlichungstag der Anmeldung: 28.06.2017
(73) Patentinhaber: manroland Goss web systems GmbH, 86153 Augsburg (DE)
(72) Erfinder: Kempkes, Flore, 82194 Groebenzell (DE); Massierer, Hartmut, 86420 Diedorf (DE); McDonald, David, Kilwinning Ayrshire, KA13 6 RL (GB)

(56) Entgegenhaltungen:
- DE-A1- 4 005 469
- DE-A1- 4 125 990
- DE-A1- 10 163 340
- DE-A1- 10 217 428

## Beschreibung

Die Erfindung betrifft ein Verfahren zur Wiederaufbereitung von Waschabfall einer Druckmaschine zur Trennung von unverbrauchtem lösemittelbasiertem Waschmittel aus dem Waschabfall, wobei der Waschabfall im wesentlichen ein Gemisch aus Wasser, verbrauchtem und unverbrauchtem Waschmittel und sonstigen flüssigen und festen Schmutzstoffen darstellt, wobei der Waschabfall zur Wiederaufbereitung in einem Behältnis aufbewahrt wird.

Bei Druckmaschinen, insbesondere bei Druckmaschinen mit fester Druckform wie beispielsweise dem Offset-, dem Tiefdruck-, dem Flexodruck- oder dem Siebdruckverfahren ist die Reinigung von Zylinder- oder Walzenoberflächen vor, während oder nach einem Druckvorgang zur Sicherstellung des problemfreien und qualitativ hochwertigen Drucks erforderlich. Beispielsweise muss beim Offset-Druckverfahren nach einer von Farbe, Bedruckstoff und weiteren Parametern abhängigen Produktionszeit die Oberfläche des oder der Übertragungszylinder gereinigt werden. Dieses sogenannte Gummituchwaschen erfolgt entweder durch manuelles Auftragen von Wasser und/oder Lösemittel und anschließendem Reinigen von Hand oder vollautomatisch mittels einer sogenannten Gummituchwaschanlage.

Zum Anlösen von angetrockneten, ausgetrockneten oder noch viskosen Druckfarben und sonstiger zum Druck erforderlicher Verbrauchsmedien oder Hilfsstoffe wie Feuchtmittelzusätze, Lacke etc. kommen pflanzliche oder auf Mineralöl basierte Lösemittel als Waschmittel zum Einsatz. Zum Lösen insbesondere von Papierstaub, Rückständen des Papierstrichs wie beispielsweise Kaolin wird zumeist Wasser oder eine wässrige Lösung verwendet.

Nach dem Reinigungsvorgang wird der Waschabfall, welcher zumeist ein Gemisch aus dem eingesetzten Lösemittel, verschmutztem Wasser und Verunreinigungen wie Rückstände von Druckfarbe, sonstigen Verbrauchsmedien, Papierstaub oder Papierstrich aufgefangen und einem Sammelbehältnis zugeführt.

Viele Druckereien sammeln die Waschabfälle in entsprechenden Containern und führen diese dann der Entsorgung zu, welche aufgrund der in den Waschabfällen enthaltenen Lösemittel und sonstiger Rückstände in der Regel als Sondermüll entsprechend kostenintensiv entsorgt werden müssen.

Zur Recyclierung derartiger Waschabfälle offenbart die DE 195 03 191 A1 ein Verfahren, mit welchem verschmutztes Prozesswasser unter Überdruck einem Filterpaket zugeführt wird, wobei in einem Querstromfiltrationsverfahren der Waschabfall in ein Permeat und ein Retentat getrennt wird.

Aus der DE 43 25 037 A1 ist eine Prozesswasser-Recycling-Anlage bekannt, bei welcher verunreinigtes Prozesswasser einem Ultrafiltrationsfilter zugeführt und in ein Filtrat und ein Konzentrat zerlegt wird.

Aus der DE 102 17 428 A1 ist ein Verfahren bekannt, mit welchem durch Zugabe von Flockungsmitteln ein als Dispersion von Pigmenten und/oder Dispersionsmittel und Wasser ausgestaltetes Abwasser die Pigmente abgetrennt werden.

Die DE 40 05 469 A1 offenbart ein Verfahren, bei welchem durch Zugabe von anorganischen Salzen der Sulfatgehalt von sulfathaltigem Abwasser in der Form abgesenkt wird, dass das gereinigte Abwasser über die Kanalisation entsorgt werden kann.

Ferner ist aus der DE 101 63 340 A1 ein Verfahren gemäß dem Oberbegriff des Anspruchs 1 bekannt.

Allerdings können mit derartigen Filtrationsverfahren in der Regel nur Feststoffe oder Bestandteile mit deutlich unterschiedlichen Viskositäten herausgefiltert werden, so dass eine weitere Verwendung des filtrierten Prozesswassers für Waschvorgänge nicht oder nur sehr eingeschränkt möglich ist.

Der Erfindung liegt daher die Aufgabe zugrunde, eine Lösung zu schaffen, die es ermöglicht, das im Waschabfall enthaltene unverbrauchte Waschmittel zu separieren, um dieses wieder einem Waschvorgang zuführen zu können.

Die Aufgabe wird durch ein Verfahren gemäß Anspruch 1 gelöst. Das erfindungsgemäße Verfahren umfasst einen ersten Verfahrensschritt, bei welchem dem Waschabfall ein Koagulant zugesetzt wird und wobei dem Waschabfall in einem zweiten Prozessschritt ein Flockungsmittel zugesetzt wird, so dass in einem dritten Verfahrensschritt der Waschabfall physikalisch in das unverbrauchte Waschmittel und ein Gemisch aus den restlichen Bestandteilen des Waschabfalls getrennt wird.

Ein derartiges Verfahren weist den Vorteil auf, dass der Waschabfall in die nicht mehr verwendbaren Schmutzstoffe wie Farbrückstände, Papierfasern, Papierstrich und verbrauchte, d. h. gebundene Waschmittel als organische Lösemittel aber auch in darin enthaltenes unverbrauchtes Waschmittel in Form eines unverbrauchten organischen, auf Kohlenwasserstoffbasis basiertes Lösemittel aufgeteilt und entsprechend separiert werden kann. Somit ist es möglich, das so gewonnene unverbrauchte Waschmittel optional nachzubehandeln und mit oder ohne entsprechende Nachbehandlung wieder dem Waschprozess zuzuführen. Dies führt zum einen zur Verringerung der zu entsorgenden Abfälle als auch zur Schonung von Ressourcen, da für derartige Waschvorgänge weniger neues, käuflich erworbenes Waschmittel eingesetzt werden muss.

Erfindungsgemäß wird als Koagulant ein anorganischer Stoff, d. h. ein anorganischer Koagulant verwendet. In einer vorteilhaften Ausgestaltung der Erfindung wird als Koagulant ein Metallsalz oder mehrere unterschiedliche Metallsalze und/ oder ein Hydroxid von Erdalkali oder mehrere unterschiedliche Hydroxide von Erdalkali verwendet.

In einer Ausgestaltung der Erfindung wird als Koagulant ein Stoff mit Aluminiumchlorid als Bestandteil, vorzugsweise mit einem Anteil von etwa 30% bis 70%, insbesondere von 40% bis 50% Aluminiumchlorid als Bestandteil verwendet.

Bevorzugte Weiterbildungen der Erfindung ergeben sich aus den Unteransprüchen und der nachfolgenden Beschreibung.

Bei Druckmaschinen wie beispielsweise Offset- oder Tiefdruckmaschinen können sich auf Oberflächen von Zylindern und/oder Walzen Rückstände von Farbresten, Papierfasern, Strich oder von anderen Verbrauchsmedien absetzen. Diese Rückstände und Ablagerungen müssen in von unterschiedlichen Parametern abhängigen Zyklen von den Zylinder- und/oder Walzenoberflächen entfernt werden. Hierbei kommen Reinigungsmittel zum Einsatz, welche als Waschmittel organische Lösemittel beinhalten. Diese organischen Lösemittel können auf pflanzlicher oder mineralölischer Basis hergestellt werden.

Nachfolgend wird ein derartiger Reinigungsvorgang beispielhaft am Gummituchwaschen beschrieben.

Bei Offset-Druckeinheiten wird Farbe und optional Feuchtmittel auf die Offset-Druckform aufgetragen, auf welcher nach dem Einfärben die druckenden Bereiche Druckfarbe führen. Die farbführenden Stellen werden von dem Plattenzylinder auf den Übertragungszylinder, welche auch als Gummizylinder aufgrund des auf seiner Mantelfläche aufgezogenen Gummituches bezeichnet werden, übertragen. Der Übertragungszylinder überträgt die Farbe der druckenden Stellen auf den Bedruckstoff.

Da der Übertragungszylinder somit direkt in Kontakt mit dem Bedruckstoff Papier steht, lagern sich insbesondere Papierstaub, Papierfasern, Strich aber auch Farbrückstände auf dem Übertragungszylinder ab.

Insofern muss insbesondere der Übertragungszylinder in regelmäßigen Abständen gereinigt werden. Dies kann entweder manuell im Stillstand der Maschine oder mittels einer vollautomatischen Gummituchwaschanlage durchgeführt werden. Hierbei wird während des Waschvorganges Waschmittel in Form von organischen Lösemitteln sowie in der Regel, jedoch nicht zwingend, Wasser mit oder ohne Zusätze wie beispielsweise Tenside auf die Mantelfläche des Übertragungszylinders aufgetragen, wobei zeitgleich oder zeitlich versetzt die Zylinderoberfläche mechanisch mittels eines Tuches oder einer Bürste gereinigt wird.

Die hierbei verwendeten Waschmittel enthalten ferner diverse Additive. Als Additive werden im Wesentlichen zum einen Korrosionsinhibitoren eingesetzt, um an den Metallteilen Korrosion zu unterbinden. Desweiteren enthalten die Waschmittel Emulgatoren, um das Waschmittel in einem arbeitsfähigen Zustand zu halten.

Das aufgetragene Waschmittel und Wasser wird einschließlich diverser Zusätze als auch den abgelösten oder aufgelösten Verunreinigungen zumindest teilweise von der Zylinderoberfläche sozusagen abgerakelt und als Waschabfall aufgefangen.

Dieser Waschabfall beinhaltet somit alle beim Reinigungsvorgang eingesetzten Stoffe wie verbrauchtes Waschmittel, Wasser, sonstige verbrauchte und unverbrauchte Zusatzstoffe, Farbrückstände bestehend aus Farbpartikeln, die öligen Bestandteile der Druckfarbe, Papierfasern, Papierstaub, Papierstrich, verunreinigtes Wasser aber eben auch unverbrauchtes Waschmittel.

Um die Ausfallzeiten der Druckmaschine sowie in aller Regel den damit verbundenen Makulaturanfall möglichst gering zu halten, wird während einem automatischem Waschvorgang ausreichend Reinigungsmittel bestehend aus einem Gemisch von Waschmittel, Wasser und im Bedarfsfall von Zusatzstoffen wie Tenside etc. zugegeben.

Abhängig von der Einwirkzeit, der Geometrie der Zylindergruppe und der Reinigungsvorrichtung sowie dem Verschmutzungsgrad kann das während eines Waschvorganges eingebrachte Waschmittel mehr oder weniger auf Mineralöl basierte Druckfarbe lösen, wobei zumeist zur Sicherstellung kurzer Waschzeiten mit einem Lösemittelüberschuss gefahren wird.

Insofern befindet sich im Waschabfall in aller Regel ein nicht unerheblicher Anteil von unverbrauchtem Waschmittel, d. h. von unverbrauchtem organischem Lösemittel. Messungen und Tests haben gezeigt, dass sich in den Waschabfällen von Illustrationsdruckmaschinen bis zu ca. 30% bis 50% unverbrauchtes Waschmittel befindet.

Zur Gewinnung dieses unverbrauchten Waschmittels wird der Waschabfall, welcher im Wesentlichen ein Gemisch aus Wasser, verbrauchtem und unverbrauchtem Waschmittel und sonstigen flüssigen und festen Schmutzstoffen darstellt, beim erfindungsgemäßen Verfahren in einem Behältnis aufbewahrt, in einem ersten Verfahrensschritt ein anorganischer Koagulant zugesetzt, um dem mit dem Koagulant versetztem Waschabfall in einem zweiten Verfahrensschritt ein Flockungsmittel zuzusetzen, um in einem dritten Verfahrensschritt den Waschabfall physikalisch in das unverbrauchte Waschmittel und ein Gemisch aus den restlichen Bestandteilen zu trennen.

Das Hinzugeben eines Koagulants bewirkt, dass die im Waschabfall befindlichen feinen und feinsten suspendierten oder kolloidalen Fremdbestandteile ausflocken und sich somit abscheiden und entsprechend absetzen.

Erfindungsgemäß wird als Koagulant ein anorganischer Stoff, d. h. ein anorganischer Koagulant verwendet. In einer vorteilhaften Ausgestaltung der Erfindung wird als Koagulant ein Metallsalz oder mehrere unterschiedliche Metallsalze und/ oder ein Hydroxid von Erdalkali oder mehrere unterschiedliche Hydroxide von Erdalkali verwendet.

Als Koagulant kommt als ein Ausführungsbeispiel ein Stoff mit Aluminiumchlorid als Bestandteil zum Einsatz, welcher in etwa 30% bis 70% Aluminiumchlorid, vorzugsweise in etwa 40% bis 50% Aluminiumchlorid beinhaltet.

Alternativ kann als Koagulat auch eine Lösung mit Calciumhydroxid verwendet werden. Hierbei kommt vorzugsweise eine wässrige Lösung von Calciumhydroxid zur Verwendung. Der Anteil des Calciumhydroxids liegt hierbei vorteilhafterweise zwischen in etwa 5% bis in etwa 40%, vorzugsweise zwischen in etwa 10% bis 30%. In einer ganz besonders bevorzugten Ausgestaltung liegt der Anteil des Calciumhydroxid bei in etwa 15% bis in etwa 20%.

Alternativ können als Koagulant auch Stoffe wie beispielsweise Aluminiumsulfat oder Aluminiumchlorid oder basisches Aluminiumchlorid und -sulfat, Eisen(III)-Sulfat, Eisen-(III)-Chlorid, Eisen(III)-Chloridsulfat oder Mischungen dieser Salze eingesetzt werden. Hinsichtlich der erforderlichen Bestandteile sind diese ebenfalls in einem Bereich von etwa 30% bis 70%, vorzugsweise in etwa 40% bis 50% anzusetzen.

Zur Sicherstellung der optimalen Vermischung und Auflösung des Koagulants in bzw. mit dem Waschabfall wird vorzugsweise der Waschabfall während der Zugabe und ebenfalls optional während der nachfolgenden Einwirkzeit verrührt. Die Zugabe des Koagulants sowie die nachfolgende optionale Einwirkung erfolgen vorzugsweise bei Raumtemperatur, können jedoch auch bei einer über der Raumtemperatur liegenden Temperatur erfolgen.

Nach dieser als erster Prozessschritt definierten Zugabe eines Koagulants zu dem in einem beliebigen Gefäß befindlichen Waschabfalls ist vorzugsweise, jedoch nicht zwingend eine Einwirkzeit einzuhalten, wobei die Einwirkzeit in etwa 5 Minuten bis ca. 30 Minuten, vorzugsweise ca. 10 Minuten bis ca. 20 Minuten andauert. Zwar ist diese Einwirkzeit nicht zwingend erforderlich, allerdings zeigen Tests, dass sich durch Gewährung einer entsprechenden Einwirkzeit ein höherer Anteil von unverbrauchtem Waschmittel zurückgewinnen lässt, wobei das zurückgewonnene Waschmittel auch eine höhere Reinheit und somit eine geringere Verschmutzung mit Abfallstoffen wie beispielsweise Farbrückständen aufweist.

In einem zweiten, dem ersten Prozessschritt mit oder ohne Einwirkzeit nachfolgendem zweiten Prozessschritt wird dem Waschabfall ein Flockungsmittel zugesetzt. Dieses Flockungsmittel dient ebenfalls zum Trennen des unverbrauchten Waschmittels zum einen von den Schmutzpartikeln und zum anderen vom in dem Waschabfall üblicherweise enthaltenen Wasser.

Als Flockungsmittel bzw. Flokkulant wird eine Polymerdispersion mit einem Polymergehalt von in etwa 1% bis in etwa 10%, vorzugsweise wird eine Polymerdispersion mit einem Polymergehalt von in etwa 2% bis in etwa 5% verwendet.

In einer besonders vorteilhaften Ausgestaltung der Erfindung wird als Flockungsmittel ein Stoff mit katiodischem Polyacrylamid in Emulsion verwendet. Hierbei beträgt der Anteil des katiodischen Polyacrylamids vorzugsweise in einem Bereich von in etwa 1% bis in etwa 10%, besonders vorzugsweise in einem Bereich von in etwa 2% bis in etwa 5%.

Eine noch schnellere und stärkere Trennung des unverbrauchten Waschmittels von den restlichen Bestandteilen des Waschabfalles kann erreicht werden, wenn als Flockungsmittel ein Stoff mit katiodischem Polyacrylamid in Emulsion mit einem Anteil von in etwa 1% bis 10%, vorzugsweise mit einem Anteil von in etwa 2,5% bis 5% ethoxyliertem Alkohol und einem Anteil von in etwa 10% bis 60%, vorzugsweise 25% bis 40% destilliertem Petroleum eingesetzt wird.

Im Anschluss an diesen zweiten Prozessschritt kann entweder unmittelbar oder mit einem zeitlichen Abstand der dritte Prozessschritt beginnen, welcher die physikalische Trennung des unverbrauchten Waschmittels vom Gemisch der restlichen Bestandteile der Waschabfälle umfasst.

Allerdings kann es von Vorteil sein, wenn der dritte Prozessschritt erst nach einer entsprechenden Einwirkzeit zwischen dem zweiten und dem dritten Prozessschritt erfolgt, da sich dann der nahezu gesamte Anteil des unverbrauchten Waschmittels des Waschabfalls von den restlichen Bestandteilen abgesetzt hat. Hierzu wird vorteilhafterweise zwischen dem zweiten Prozessschritt und dem dritten Prozessschritt eine Einwirkzeit von in etwa acht Stunden bis ca. 30 Stunden, vorzugsweise bzw. insbesondere zwischen 12 Stunden und 24 Stunden belassen, so dass sich das unverbrauchte Waschmittel vollständig mittels Schwerkraft absetzen kann.

Zur Sicherstellung der optimalen Vermischung und Auflösung des Flockungsmittels in bzw. mit dem Waschabfall wird vorzugsweise der Waschabfall während der Zugabe des Flockungsmittels und optional während der Einwirkzeit verrührt. Die Zugabe des Flockungsmittels sowie die nachfolgende optionale Einwirkung erfolgen vorzugsweise bei Raumtemperatur, können jedoch auch bei einer über der Raumtemperatur liegenden Temperatur erfolgen.

Das physikalische Trennen des unverbrauchten Waschmittels kann durch die bekannten derartigen Verfahren erfolgen. Dies ist beispielsweise im einfachsten Fall das Abschöpfen oder Abpumpen des unverbrauchten Waschmittels, welches sich bedingt durch die Schwerkraft aufgrund der geringeren Dichte im Vergleich zu den restlichen Inhaltsstoffen oben auf den restlichen Rückständen des Waschabfalles absetzt.

Die physikalische Trennung kann jedoch beispielsweise durch Ablassen der sich im Behälter unten absetzenden restlichen Inhaltsstoffe erfolgen, d. h. die untere Phase wird vollständig abgelassen, so dass sich im Behälter nur noch das zurückgewonnene unverbrauchte Waschmittel befindet.

Als weitere beispielhafte Möglichkeit der Trennung des unverbrauchten Waschmittels von den restlichen Inhaltsstoffen sei der Einsatz einer Zentrifuge genannt, bei welcher sich die unterschiedlichen Inhaltsstoffe aufgrund der unterschiedlichen Dichten in bekannten Verfahren trennen lassen.

Da dem Waschmittel teilweise unterschiedliche Zusatzstoffe wie beispielsweise Emulgatoren oder Korrosionsinhibitoren zur Verbesserung der Wascheigenschaften oder des Korrosionsverhaltens beigesetzt werden, und aufgrund der chemisch stattfindenden Reaktion durch Zugabe des Koagulants und des Flockungsmittels die Anwesenheit oder die korrekte Dosierung derartiger Stoffe im unverbrauchten Waschmittel nach der Trennung nicht mehr sichergestellt werden kann, kann im Nachgang an den dritten Prozessschritt das rückgewonnene unverbrauchte Waschmittel im Bedarfsfall nachbehandelt werden.

So kann zum einen zur Sicherstellung des erforderlichen Reinheitsgrades des Waschmittels dieses beispielsweise destilliert werden. Bei einer Destillation wird das zurückgewonnene Waschmittel auf eine definierte, vom Siedepunkt der darin enthaltenen Kohlenwasserstoffe abhängige Temperatur erwärmt, so dass die relevanten Kohlenwasserstoffe verdunsten und/oder verdampfen, aufgefangen und abgekühlt werden, so dass als Destillat ein in der Regel vollkommen reines Waschmittel mit zumindest hinsichtlich der chemischen Bestandteile weitestgehend bekannter Zusammensetzung erhalten wird. Dieses Destillat kann als unverbrauchtes Waschmittel wieder dem Reinigungsprozess in der Druckmaschine zugeführt werden.

Desweiteren kann das Destillat oder aber das zurückgewonnene unverbrauchte Waschmittel mit Korrosionsinhibitoren und/oder mit Emulgatoren zur Erhöhung der Emulsionsbildung mit dem am Waschprozess zumeist beteiligtem Wasser versetzt werden, um die erforderlichen Konzentrationen dieser Stoffe wieder sicherzustellen. Dieses mit Emulgatoren oder mit Korrosionsinhibitoren versetzte zurückgewonnene unverbrauchte Waschmittel kann dann wieder dem Reinigungsprozess in der Druckmaschine zugeführt werden.

## Patentansprüche

1. Verfahren zur Wiederaufbereitung von Waschabfall einer Druckmaschine , wobei der Waschabfall im wesentlichen ein Gemisch aus Wasser, verbrauchtem und unverbrauchtem Waschmittel und sonstigen flüssigen und festen Schmutzstoffen darstellt, wobei der Waschabfall zur Wiederaufbereitung in einem Behältnis aufbewahrt wird, wobei dem Waschabfall zur Trennung von unverbrauchtem lösemittelbasiertem Waschmittel aus dem Waschabfall
- in einem ersten Verfahrensschritt ein anorganischer Koagulant zugesetzt wird, **dadurch gekennzeichnet, dass**
- in einem zweiten Verfahrensschritt ein Flockungsmittel zugesetzt wird,
- in einem dritten Verfahrensschritt der Waschabfall physikalisch in das unverbrauchte organische, auf Kohlenwasserstoffbasis basierte Lösemittel und ein Gemisch aus den restlichen Bestandteilen getrennt wird.

2. Verwendung von einem Koagulantund einem Flockungsmittel zur Wiederaufbereitung von organischem, lösemittelbasiertem Waschabfall einer Druckmaschine und zur Trennung von lösemittelbasierten organischen Lösemittel aus dem Waschabfall, wobei der Waschabfall im wesentlichen ein Gemisch aus Wasser, verbrauchtem und unverbrauchtem organischen, auf Kohlenwasserstoff basierten Waschmittel und sonstigen flüssigen und festen Schmutzstoffen darstellt, wobei der Waschabfall zur Wiederaufbereitung in einem Behältnis aufbewahrt wird, wobei dem Waschabfall in einem ersten Verfahrensschritt ein anorganischer Koagulant zugesetzt wird und wobei dem Waschabfall in einem zweiten Verfahrensschritt ein Flockungsmittel zugesetzt wird und wobei in einem dritten Verfahrensschritt der Waschabfall physikalisch in das unverbrauchte, organische, auf Kohlenwasserstoffbasis basierte Waschmittel und ein Gemisch aus den restlichen Bestandteilen getrennt wird.

3. Verfahren nach Anspruch 1, **dadurch gekennzeichnet, dass** als Koagulant eines oder mehrere unterschiedliche Metallsalze und/oder ein oder mehrere unterschiedliche Hydroxide von Erdalkali verwendet wird.

4. Verfahren nach Anspruch 1 oder 3, **dadurch gekennzeichnet, dass** als Koagulant ein Stoff mit Aluminiumchlorid als Bestandteil verwendet wird.

5. Verfahren nach Anspruch 4, **dadurch gekennzeichnet, dass** als Koagulant ein Stoff mit einem Anteil von in etwa 30% bis 70% Aluminiumchlorid eingesetzt wird.

6. Verfahren nach Anspruch 5, **dadurch gekennzeichnet, dass** als Koagulant ein Stoff mit einem Anteil von in etwa 40% bis 50% Aluminiumchlorid eingesetzt wird.

7. Verfahren nach Anspruch 1, **dadurch gekennzeichnet, dass** als Koagulant ein Stoff mit in etwa 30 bis 70%, vorzugsweise 40% bis 50% Aluminiumsulfat oder Aluminiumchlorid oder basisches Aluminiumchlorid und -sulfat, Eisen(III)-Sulfat, Eisen(III)-Chlorid oder Eisen(III)-Chloridsulfat oder Mischungen dieser Satze eingesetzt wird.

8. Verfahren nach Anspruch 1, **dadurch gekennzeichnet, dass** als Koagulant eine Lösung mit Calciumhydroxid verwendet wird.

9. Verfahren nach Anspruch 8, **dadurch gekennzeichnet, dass** als Koagulant eine Lösung mit in etwa 5% bis in etwa 40% Calciumhydroxid eingesetzt wird.

10. Verfahren nach Anspruch 9, **dadurch gekennzeichnet, dass** als Koagulant eine Lösung mit in etwa 10% bis in etwa 30%, insbesondere in etwa 15% bis in etwa 20% Calciumhydroxid eingesetzt wird.

11. Verfahren nach einem der Ansprüche 1 oder 3 bis 10, **dadurch gekennzeichnet, dass** als Flockungsmittel eine Polymerdispersion mit einem Polymergehalt von in etwa 1% bis in etwa 10%, vorzugsweise mit einem Polymergehalt von in etwa 2% bis in etwa 5%, eingesetzt wird.

12. Verfahren nach Anspruch 11, **dadurch gekennzeichnet, dass** als Flockungsmittel eine Polymerdispersion mit einem Polymergehalt von in etwa 2% bis in etwa 5% verwendet wird.

13. Verfahren nach einem der Ansprüche 11 oder 12, **dadurch gekennzeichnet, dass** als Polymer ein Stoff mit kationischem Polyacrylamid als Bestandteil verwendet wird.

14. Verfahren nach einem der Ansprüche 1 oder 3 bis 11, **dadurch gekennzeichnet, dass** als Flockungsmittel ein Stoff mit katiodischem Polyacrylamid in Emulsion mit einem Anteil von in etwa 1% bis 10% ethoxyliertem Alkohol und mit einem Anteil von in etwa 10% bis 60% destilliertem Petroleum eingesetzt wird.

15. Verfahren nach Anspruch 14, **dadurch gekennzeichnet, dass** als Flockungsmittel ein Stoff mit katiodischem Polyacrylamid in Emulsion mit einem Anteil von in etwa 2,5 bis 5% ethoxyliertem Alkohol und mit einem Anteil von in etwa 25% bis 40% destilliertem Petroleum eingesetzt wird.

## Claims

1. A method for recycling washing waste of a printing press, wherein the washing waste substantially represents a mixture of water, used and unused washing agent and other liquid and solid contaminants, wherein the washing waste is stored in a container for recycling,
wherein,
for separating unused solvent-based washing agent from the washing waste,
- an inorganic coagulant is added to the washing waste in a first method step, **characterized in that**
- a flocking agent is added in a second method step,
- the washing waste is physically separated into the unused organic solvent, which is based on hydrocarbon base and a mixture of the remaining components in a third method step.

2. A use of a coagulant and a flocking agent for recycling organic, solvent-based washing waste of a printing press and for separating solvent-based organic solvent from the washing waste, wherein the washing waste is substantially a mixture of water, used and unused organic, hydrocarbon-based washing agent and other liquid and solid contaminants, wherein the washing waste is stored in a container for recycling, wherein an inorganic coagulant is added to the washing waste in a first method step, and wherein a flocking agent is added to the washing waste in a second method step, and wherein the washing waste is physically separated into the unused, organic solvent, which is based on hydrocarbon base, and a mixture of the remaining components in a third method step.

3. The method according to claim 1, **characterized in that** one or a plurality of different metal salts and/or one or a plurality of different hydroxides of alkaline earth is used as coagulant.

4. The method according to claim 1 or 3, **characterized in that** a substance comprising aluminum chloride as component is used as coagulant.

5. The method according to claim 4, **characterized in that** a substance comprising a percentage of approximately 30% to 70% of aluminum chloride is used as coagulant.

6. The method according to claim 5, **characterized in that** a substance comprising a percentage of approximately 40% to 50% of aluminum chloride is used as coagulant.

7. The method according to claim 1, **characterized in that** a substance comprising approximately 30% to 70%, preferably 40% to 50% of aluminum sulfate or aluminum chloride or basic aluminum chloride and sulphate, iron(III) sulphate, iron(III) chloride or iron(III) chloride sulphate or mixtures of these salts is used as coagulant.

8. The method according to claim 1, **characterized in that** a solution comprising calcium hydroxide is used as coagulant.

9. The method according to claim 8, **characterized in that** a solution comprising approximately 5% to approximately 40% of calcium hydroxide is used as coagulant.

10. The method according to claim 9, **characterized in that** a solution comprising approximately 10% to approximately 30%, in particular approximately 15% to approximately 20% of calcium hydroxide is used as coagulant.

11. The method according to one of claims 1 or 3 to 10, **characterized in that** a polymer dispersion comprising a polymer content of approximately 1% to approximately 10%, preferably comprising a polymer content of approximately 2% to approximately 5% is used as flocking agent.

12. The method according to claim 11, **characterized in that** a polymer dispersion comprising a polymer content of approximately 2% to approximately 5% is used as flocking agent.

13. The method according to one of claims 11 or 12, **characterized in that** a substance comprising cationic polyacrylamide as component is used as polymer.

14. The method according to one of claims 1 or 3 to 11, **characterized in that** a substance comprising cationic polyacrylamide in emulsion comprising a percentage of approximately 1% to 10% of ethoxylated alcohol and comprising a percentage of approximately 10% to 60% of distilled petroleum is used as flocking agent.

15. The method according to claim 14, **characterized in that** a substance comprising cationic polyacrylamide in emulsion comprising a percentage of approximately 2.5 to 5% of ethoxylated alcohol and comprising a percentage of approximately 25% to 40% of distilled petroleum is used as flocking agent.

## Revendications

1. Procédé pour le recyclage de déchets de lavage d'une imprimante, dans lequel les déchets de lavage consistent essentiellement en un mélange d'eau, de lessive usée et neuve et d'autres matières polluantes liquides et solides, dans lequel les déchets de lavage sont conservés dans une cuve pour le recyclage,
- dans lequel un coagulant inorganique est ajouté aux déchets de lavage au cours d'une première étape de procédé, pour séparer la lessive à base de solvant neuve d'avec les déchets de lavage, **caractérisé en ce que**
- un floculant est ajouté au cours d'une deuxième étape de procédé,
- les déchets de lavage sont physiquement séparés en un solvant organique à base d'hydrocarbure neuf et un mélange des composants restants, au cours d'une troisième étape de procédé.

2. Utilisation d'un coagulant et d'un floculant pour le recyclage de déchets de lavage organiques à base de solvant d'une imprimante et pour la séparation de solvant organique à base de solvant d'avec les déchets de lavage, dans laquelle les déchets de lavage consistent essentiellement en un mélange d'eau, de lessive organique à base d'hydrocarbure usée et neuve et d'autres matières polluantes liquides et solides, dans laquelle les déchets de lavage sont conservés dans une cuve pour le recyclage, dans lequel un coagulant inorganique est ajouté aux déchets de lavage au cours d'une première étape de procédé, et dans lequel un floculant est ajouté au cours d'une deuxième étape de procédé, et dans lequel les déchets de lavage sont physiquement séparés en la lessive organique à base d'hydrocarbure neuve et un mélange des composants restants, au cours d'une troisième étape de procédé.

3. Procédé selon la revendication 1, **caractérisé en ce que** un ou plusieurs sels marins différents et/ou un ou plusieurs hydroxydes d'alcalino-terreux différents sont utilisés en tant que coagulant.

4. Procédé selon la revendication 1 ou 3, **caractérisé en ce que** une substance comprenant du chlorure d'aluminium comme composant est utilisée en tant que coagulant.

5. Procédé selon la revendication 4, **caractérisé en ce qu'**une substance comprenant une part d'environ 30% à 70% de chlorure d'aluminium est utilisée en tant que coagulant.

6. Procédé selon la revendication 5, **caractérisé en ce qu'**une substance avec une part d'environ 40% à 50% de chlorure d'aluminium est utilisée en tant que coagulant.

7. Procédé selon la revendication 1, **caractérisé en ce qu'**une substance comprenant une part d'environ 30% à 70%, de préférence 40% à 50%, de sulfate d'aluminium ou de chlorure d'aluminium ou de chlorure et de sulfate d'aluminium basique, de sulfate ferrique (III), de chlorure ferrique (III), ou de chloro-sulfate ferrique (III) ou de mélanges de ces taux, est utilisée en tant que coagulant.

8. Procédé selon la revendication 1, caractérisé en ce queune solution comprenant de l'hydroxyde de calcium est utilisée en tant que coagulant.

9. Procédé selon la revendication 8, **caractérisé en ce qu'**une solution comprenant entre environ 5% et environ 40% d'hydroxyde de calcium est utilisée en tant que coagulant.

10. Procédé selon la revendication 9, **caractérisé en ce qu'**une solution comprenant entre environ 10% et environ 30%, en particulier entre environ 15% et environ 20% d'hydroxyde de calcium est utilisée en tant que coagulant.

11. Procédé selon l'une des revendications 1 ou 3 à 10, **caractérisé en ce que** une dispersion de polymère avec une teneur en polymère d'environ 1% à environ 10%, avantageusement avec une teneur en polymère d'environ 2% à environ 5%, est utilisée en tant que floculant.

12. Procédé selon la revendication 11, **caractérisé en ce qu'**une dispersion avec une teneur en polymère d'environ 2% à environ 5% est utilisée en tant que floculant.

13. Procédé selon l'une des revendications 11 ou 12, **caractérisé en ce qu'**une substance comprenant un polyacrylamide cationique comme composant est utilisée en tant que polymère.

14. Procédé selon l'une des revendications 1 ou 3 à 11, **caractérisé en ce qu'**une substance comprenant un polyacrylamide cationique en émulsion, avec une part d'environ 1% à 10% d'alcool éthoxylé et avec une part d'environ 10% à 60% de pétrole distillé, est utilisée en tant que floculant.

15. Procédé selon la revendication 14, **caractérisé en ce qu'**une substance comprenant un polyacrylamide cationique en émulsion, avec une part d'environ 2,5 à 5% d'alcool éthoxylé et avec une part d'environ 25% à 40% de pétrole distillé, est utilisée en tant que floculant.
